# EUROPÄISCHE PATENTSCHRIFT

(11) **EP 1 266 775 B1**
(45) Veröffentlichungstag und Bekanntmachung des Hinweises auf die Patenterteilung: **09.04.2008**
(21) Anmeldenummer: 02012206.5
(22) Anmeldetag: 03.06.2002
(51) Int. Cl.: B60G 17/052, F16K 31/00

(54) **Pneumatisches Schaltventil für Anlagen zum Heben und Senken des Fahrzeugaufbaus von luftgefederten Fahrzeugen**
Pneumatic switching valve for body lifting and lowering systems for vehicles with pneumatic suspension
Soupape pneumatique de commutation pour dispositfs de soulèvement ou d'abaissement de la carrosserie de véhicules à suspension pneumatique

(30) Priorität: 16.06.2001 DE 10129143
(43) Veröffentlichungstag der Anmeldung: 18.12.2002
(73) Patentinhaber: Haldex Brake Products GmbH, 69123 Heidelberg (DE)
(72) Erfinder: Sulzyc, Georg, 69168 Wiesloch (DE); Blanz, Roland, 69253 Heiligkreuzsteinach (DE)
(74) Vertreter: Rehberg Hüppe + Partner

(56) Entgegenhaltungen:
- EP-A- 0 520 148
- DE-A- 2 623 235
- GB-A- 1 559 681
- US-A- 3 140 725

## Beschreibung

Die Erfindung betrifft ein pneumatisches Schaltventil für Anlagen zum Heben und Senken des Fahrzeugaufbaus von luftgefederten Fahrzeugen, mit einer ein mechanisches Bedienungselement aufweisenden Steuereinrichtung für die Stellungen Heben, Senken, Fahrt und Stop, bei dem in einem Gehäuse für mindestens einen Luftfederkreis je ein Einlassventil, ein Auslassventil und ein Sperrventil, jeweils in Stößelbauart, vorgesehen sind, wobei das Sperrventil an eine von einem Niveauregelventil herangeführte Leitung angeschlossen ist, und eine Federanordnung zum Rückführen des Bedienungselementes nach dem Loslassen in die Stellung Stop vorgesehen ist sowie durch Beaufschlagung eines Steuerkolbens mit Druckluft das Schaltventil aus der Stellung Stop in die Stellung Fahrt überführbar ist, während der Steuerkolben durch Verdrehen das Schaltventil aus der Stellung Stop in die Stellung Heben oder Senken umschaltet.

Ein solches pneumatisches Schaltventil wird im Containerbetrieb von Hand betätigt, um eine Last aufzunehmen, den Fahrzeugaufbau an die Höhe einer Beladungsrampe anzupassen u. dgl.. Die vorliegende Erfindung beschreibt ein mechanisch steuerbares, auch pneumatisch aus der Stellung Stop in die Stellung Fahrt überführbares Schaltventil, bei welchem das Bedienungselement in der Regel als Drehgriff oder Drehknopf vorgesehen ist, der außer seiner Verdrehbewegung auch eine Axialbewegung ausführen kann. Das Schaltventil ist jedoch auch während der Fahrt in Funktion. Es nimmt während der Fahrt die Stellung Fahrt ein, so dass das willkürliche Heben und Senken des Fahrzeugaufbaus während der Fahrt unterbunden ist. Allerdings gestattet das Schaltventil die Einwirkung eines Niveauregelventiles in der Leitungsverbindung zu den Luftfederbälgen.

Ein pneumatisches Schaltventil der eingangs beschriebenen Art ist aus der DE 41 20 824 C1 bekannt. Das Schaltventil weist einen Steuerkolben auf, der eine Nockenfläche besitzt, mit welcher der Stößel eines Sperrventiles durch Axialverschieben des Steuerkolbens betätigt werden kann. Insoweit ist ein Schalten aus der Stellung Stop in die Stellung Fahrt und umgekehrt möglich. Mit dem Steuerkolben sind Nockenscheiben axial verschiebbar, jedoch drehfest gekuppelt, wobei die Nockenscheiben Nockenflächen zur Betätigung eines Einlassventils und eines Auslassventils aufweisen. Für jeden Luftfederkreis sind immer drei Ventile, nämlich ein Einlassventil, ein Auslassventil und ein Sperrventil vorgesehen. Dem Steuerkolben ist eine Hülse als weiteres Bauteil zugeordnet, die einerseits mit dem Steuerkolben und andererseits mit dem Bedienungselement drehfest verbunden ist. Die Anordnung der Hülse sowie der Nockenscheiben für die Einlass- und die Auslassventile machen die Konstruktion kompliziert und aufwendig. Außerdem ist eine Federanordnung vorgesehen, die auf die Hülse und über die Hülse auf den Steuerkolben einwirkt, um eine automatische Rückführung aus der Stellung Heben oder Senken in die Stellung Stop zu bewirken, sobald das Bedienungselement losgelassen wird, wie dies üblicherweise nach einem Hebe- oder Senkvorgang der Fall ist. Auch diese Federanordnung stellt einen zusätzlichen Bauaufwand dar. Die Achsen der drei Ventile, die für einen Luftfederkreis bestimmt sind, sind in einer gemeinsamen Ebene angeordnet, die die Achse des Schaltventils bzw. des Schaltkolbens schneidet. Auf diese Art und Weise können auch Ventilgruppen für mehrere Luftfederkreise über den Umfang verteilt angeordnet werden. Es ist auch eine Verriegelungseinrichtung für die Verhinderung einer Verdrehung des Schaltkolbens in der Stellung Fahrt vorgesehen. Der Steuerkolben ist durch Druckluft, insbesondere Druckluftimpulse, axial verschiebbar im Gehäuse des Schaltventils gelagert, um sicherzustellen, dass die Stellung Fahrt im Fahrbetrieb eingenommen wird. Nachteilig an diesem Schaltventil ist die komplizierte Federanordnung für die Rückführung des Steuerkolbens in die Stellung Stop sowie die zweiteilige Bauart des Steuerkolbens aus Schaltwelle und Hülse. Auch die Verwirklichung der Nockenflächen an separaten Nockenscheiben, die verdrehgesichert und axial verschiebbar auf dem Steuerkolben angeordnet sind, stellt einen beträchtlichen Aufwand dar.

Ein anderes pneumatisches Schaltventil ist aus der DE 26 23 235 C3 bekannt. Die manuell betätigbare Steuereinrichtung weist ein mechanisches Bedienungselement auf, welches aus einer Schaltwelle und einem Bedienungshebel zusammengesetzt ist. Über den Bedienungshebel kann die Schaltwelle in fünf verschiedene Winkellagen um ihre Achse verschwenkt werden, wobei die Stellung Stop zweimal vorgesehen ist. Auch hier sind auf der Schaltwelle Nockenscheiben angebracht, die für je einen Luftfederkreis ein Einlassventil, ein Auslassventil und ein Sperrventil betätigen. Diese drei Ventile sind in einem scheibenartigen Gehäusekörper untergebracht, wobei die Achsen der Ventile in einer gemeinsamen Ebene liegen, die senkrecht zu der Achse der Schaltwelle angeordnet ist. Auf diese Weise kann das Ventil in einfacher Weise auch für zwei oder mehrere Luftfederkreise aufgebaut und erweitert werden. Es sind hier besondere Rasteinrichtungen für die fünf Stellungen vorgesehen, so dass eine teilautomatische Betätigung nicht möglich ist. Eine ordnungsgemäße Betätigung ist von der Gewissenhaftigkeit der Bedienungsperson abhängig. Damit besteht die Möglichkeit, dass das Ventil nach einem Ladebetrieb die Stellung Fahrt nicht automatisch einnimmt.

Aus der DE 25 10 954 A1 ist ein Schaltventil für die Stellungen Heben, Senken, Fahrt und Stop bekannt. Bei diesem Schaltventil werden die dem einzelnen Luftfederkreis zugeordneten Ventile nicht in Stößelbauart, sondern in Schieberbauart verwirklicht. Es ist ein gesonderter Steuerkolben vorgesehen, der mit Druckluft beaufschlagbar ist, so dass dieses Schaltventil über Druckluft in die Stellung Fahrt verstellt werden kann. Die beiden Ventilschieber sind mit ihren Achsen parallel zueinander angeordnet. Es sind Rückführfedern für die Schieber vorgesehen, die eine Rückführung des Schaltventiles in die Stellung Stop bewirken, sobald das mechanische Bedienungselement losgelassen wird.

Der Erfindung liegt die Aufgabe zugrunde, ein Schaltventil der eingangs beschriebenen Art einfacher zu gestalten und trotzdem sämtliche Funktionen des gattungsgemäßen Schaltventils zu ermöglichen.

Dies wird erfindungsgemäß beim Schaltventil der eingangs beschriebenen Art dadurch erreicht, dass der Steuerkolben Nockenflächen zur Betätigung der Ventilkörper des Einlassventils, des Auslassventils und des Sperrventils aufweist, dass das Einlassventil und das Auslassventil gegensinnig in einer gemeinsamen Ebene senkrecht zu der Achse des Steuerkolbens angeordnet sind, wobei die Achsen des Einlassventils und des Auslassventils einen Abstand zu der Achse des Steuerkolbens aufweisen, und dass die Federanordnung zum Rückführen des Bedienungselementes aus den Stellungen Heben oder Senken in die Stellung Stop zugleich von den Schließfedern des Einlassventils und des Auslassventils gebildet wird.

Die Erfindung geht von dem Gedanken aus, die mehrteilige und damit aufwendige Bauart des gattungsgemäßen Schaltventils unter Verwendung einer Schaltwelle, einer Hülse und mehrerer Nockenscheiben zu verlassen und die Nockenflächen direkt an dem Steuerkolben anzuordnen. Dabei ist eine einteilige Bauart möglich. Es ist aber auch möglich, mehrere Teile miteinander fest zu einer Einheit zu verbinden, die axialverschieblich und verdrehbar sowie gezielt blockiert in dem Gehäuse gelagert und verschiebbar ist. Damit kommen drehfeste Verbindungen zwischen Einzelteilen bei Beibehaltung der axialen Verschiebbarkeit in Fortfall. Wichtig ist auch, dass die gesamte zusätzliche Federanordnung zum Rückführen des Bedienungselementes aus den Stellungen Heben oder Senken in die Stellung Stop in Fortfall kommt. Die betreffende Funktion wird von ohnehin erforderlichen Schließfedern des Einlassventils und des Auslassventils übernommen. Die Ventile werden in Stößelbauart realisiert, d. h. jedes Ventil weist einen Ventilkörper und einen Stößel auf. Der Ventilkörper bildet nach Art eines Rückschlagventils mit einem gehäusefesten Rand ein Ventil. Der Ventilkörper ist, wie ebenfalls bei Rückschlagventilen üblich, auf einer Schließfeder abgestützt. Der Stößel und der Ventilkörper jedes Ventils können einstückig, aber auch mehrteilig ausgebildet sein. Die Schließfedern des Einlassventils und des Auslassventils erfüllen nicht nur die Schließfunktion dieser Ventile, sondern gleichzeitig auch die Rückführfunktion im Containerbetrieb in die Stellung Stop. Zu diesem Zweck sind die Schließfedern sinnvollerweise etwas stärker dimensioniert, als dies bei Schließfedern von Rückschlagventilen der Fall ist, die nur die Schließfunktiön zu erbringen haben. Wichtig ist dabei, dass das Einlassventil und das Auslassventil gegensinnig in einer gemeinsamen Ebene angeordnet sind, wobei die Ebene sich senkrecht zu der Achse des Steuerkolbens erstreckt. Um genügend große Hebelarme für die Übertragung der Rückstellkraft bzw. des Rückdrehmomentes auf den Schaltkolben zu ermöglichen, sind die Achsen des Einlassventils und des Auslassventils in einem Abstand zu der Achse des Steuerkolbens angeordnet. Dieser Abstand bildet dann bei der Kraftübertragung den Hebelarm. Die Achsen der beiden Ventile und die Achse des Schaltkolbens schneiden also einander nicht. Dagegen kann das Sperrventil mit seiner Achse so angeordnet sein, dass sich seine Achse mit der Achse des Steuerkolbens schneidet. Das Sperrventil soll bewusst keine Rückstellkraft auf den Steuerkolben ausüben.

In einer bevorzugten Ausführungsform kann der Steuerkolben einen radial abstehenden Nocken aufweisen, der die Nockenflächen zum gegensinnigen Betätigen des Einlassventils und des Auslassventils aufweist, wobei dann das Einlassventil und das Auslassventil mit ihren Achsen fluchtend zueinander angeordnet sind. Der radial abstehende Nocken ist damit nasenartig ausgebildet und besitzt rechts und links die beiden Nockenflächen für die gegensinnige Betätigung des Einlassventils und des Auslassventils. Der radial abstehende Nocken bildet dabei gleichzeitig den Hebelarm für die Übertragung eines Rückstellmomentes über die Schließfedern nach dem Loslassen des Bedienungselementes aus der Stellung Heben oder Senken. Es besteht durchaus die Möglichkeit, auch das Sperrventil mit seiner Achse in dieser gemeinsamen Ebene zusätzlich anzuordnen, so dass alle Elemente für einen Luftfederkreis in einer vergleichsweise flachen Scheibe zusammengefasst sind. Für eine mehrkreisige Ausstattung können dann mehrere solcher Scheiben aufeinander angeordnet werden.

Bei einer weiteren bevorzugten Ausführungsform weist der Steuerkolben zwei radial abstehende Nocken auf, die die Nockenflächen zur gegensinnigen Betätigung des Einlassventils und des Auslassventils aufweisen. Dabei sind das Einlassventil und das Auslassventil mit ihren Achsen parallel zueinander angeordnet. Die beiden radial abstehenden Nocken bilden bevorzugt einen Wiegebalken, dessen gegensinnige Bewegung die Ventilstößel der beiden Ventile gegenläufig beaufschlagt. Umgekehrt werden auch die Rückstellkräfte entsprechend übertragen. Bei dieser Anordnung sind die Achsen des Einlassventils und des Auslassventils parallel zueinander und im Abstand vorgesehen. Der Abstand zu der Achse des Schaltkolbens ist für beide Ventile zweckmäßig gleich gewählt.

Das Bedienungselement und der Steuerkolben können sinnvollerweise fest miteinander verbunden sein, so dass sie eine Einheit bilden, die gemeinsam verdrehbar und gemeinsam axial verschiebbar ist. Die manuelle Verstellung zwischen den Stellungen Fahrt und Stop erfolgt durch eine Axialverschiebung der Einheit, während die Stellungen Heben und Senken einer Verdrehbewegung der Einheit aus dieser Stellung Stop heraus zugeordnet sind. Bei dieser festen Verbindung zwischen Bedienungselement und Steuerkolben entfällt die Anordnung von Schiebepassungen, die eine axiale Beweglichkeit ermöglichen und dennoch die drehfeste Verbindung beibehalten.

Die Verdrehbarkeit des Steuerkolbens sollte durch Anschläge begrenzt sein. Dies ist sinnvoll, damit ein Durchdrehen des Steuerkolbens verhindert wird, bei dem eine unkontrollierte Betätigung des Einlassventils und des Auslassventils die Folge sein könnte. Die für die Betätigung des Sperrventils vorgesehene Nockenfläche kann sich über den durch die Anschläge begrenzten Verdrehwinkel erstrecken. Es besteht allerdings keine Notwendigkeit hierzu.

Es ist zweckmäßig, wenn die für das Einlassventil und das Auslassventil bestimmten Nockenflächen des Steuerkolbens so ausgebildet sind, dass in der Stellung Fahrt keine Anlage an den Stößeln des Einlassventils und Auslassventils vorliegt. Damit ist sichergestellt, dass das Einlassventil wie auch das Auslassventil verlässlich ihre Schließstellungen einnehmen und beibehalten können. Die von den Schließfedern ausgeübten Schließkräfte werden nur auf die Ventilkörper übertragen und stützen sich damit nicht über die Stößel am Steuerkolben ab. Es versteht sich, dass das hierfür vorgesehene Spiel relativ klein bemessen sein sollte, um umgekehrt im Containerbetrieb bereits beim anfänglichen Verdrehen des Steuerkolbens einen Hebe- oder Senkeffekt zu bewirken.

Weiterhin besteht die Möglichkeit, dass die für das Sperrventil bestimmte Nockenfläche des Steuerkolbens so ausgebildet ist, dass in den Stellungen Stop, Heben und Senken keine Anlage an dem Stößel des Sperrventils vorliegt. Dies ist sinnvoll, um die Reibkräfte, die beim Verdrehen des Steuerkolbens überwunden werden müssen, gering zu halten.

Die für das Sperrventil bestimmte Nockenfläche des Steuerkolbens kann so ausgebildet sein, dass in der Stellung Fahrt eine Verrastung des Steuerkolbens an dem Stößel des Sperrventils eintritt. Diese Verrastung ist insbesondere dann sinnvoll, wenn zur automatischen Einnahme der Stellung Fahrt nur Druckluftimpulse in zeitlichen Abständen auf den Steuerkolben gegeben werden und dennoch erreicht werden soll, dass der Steuerkolben während der Fahrt seine Stellung Fahrt nicht verlässt. Umgekehrt ist es im Ladebetrieb möglich, durch eine manuell aufzubringende Axialkraft die Verrastung des Steuerkolbens zu überwinden und damit den Steuerkolben zunächst in die Stellung Stop zurückzuführen und anschließend einen Hebe- oder Senkvorgang einzusteuern.

Besonders einfach wird die Konstruktion der Ventile, wenn das Einlassventil, das Auslassventil und/oder das Sperrventil so ausgebildet sind, dass der jeweilige Stößel mit dem jeweiligen Ventilkörper fest verbunden ist. Weiterhin besteht die Möglichkeit, das Einlassventil, das Auslassventil und das Sperrventil übereinstimmend auszubilden, so dass die Ventilkörper/Stößelelemente beispielsweise austauschbar bzw. für jedes der drei Ventile einsetzbar sind.

Die Erfindung wird anhand bevorzugter Ausführungsbeispiele, die in den Zeichnungen dargestellt sind, weiter erläutert und beschrieben. Es zeigen:
- Fig. 1: einen Vertikalschnitt durch eine erste Ausführungsform des Schaltventils,
- Fig. 2: eine Draufsicht von oben auf das Schaltventil gemäß Fig. 1,
- Fig. 3: eine Detaildarstellung des Schaltventils im Bereich der Verriegelungseinrichtung,
- Fig. 4: eine Detaildarstellung im Bereich unterhalb der Verriegelungseinrichtung,
- Fig. 5: eine Detailansicht des Steuerkolbens des Schaltventils der Fig. 1 bis 4,
- Fig. 6: eine Draufsicht auf den Steuerkolben gemäß Fig. 5,
- Fig. 7: einen Vertikalschnitt durch ein Schaltventil in einer zweiten Ausführungsform, und
- Fig. 8: einen Schnitt gemäß der Linie VIII-VIII in Fig. 7.

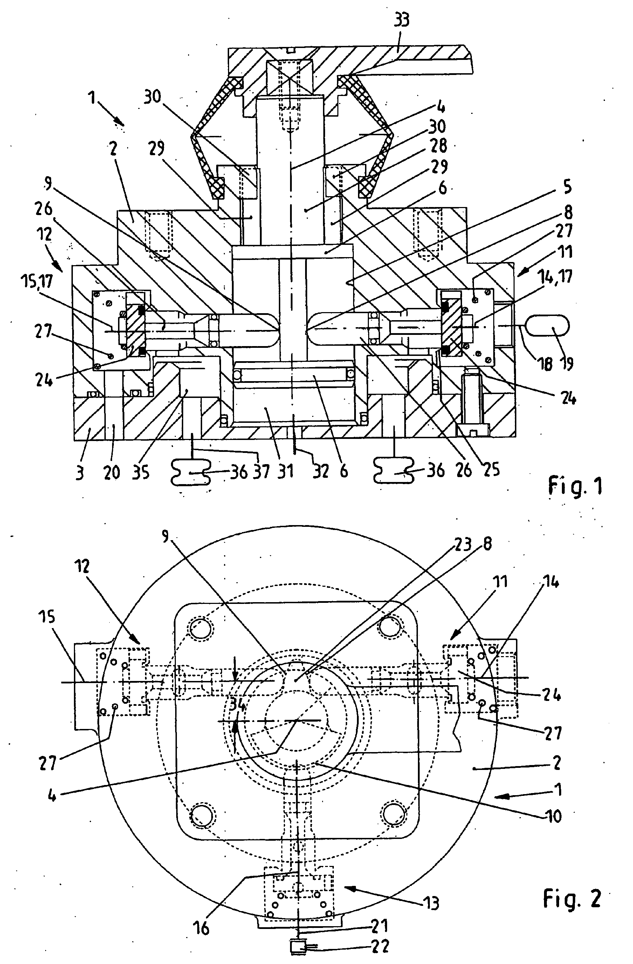

Das in Fig. 1 dargestellte Schaltventil 1 weist ein Gehäuse 2 auf, welches unterseitig mit einem Deckel 3 dichtend verschlossen ist. Das Schaltventil 1 weist eine Achse 4 auf. Konzentrisch zu der Achse 4 ist im Gehäuse 2 eine zylindrische Bohrung 5 gebildet, in der ein Steuerkolben 6 gleitend und dichtend geführt ist. Der Steuerkolben 6 trägt einen Mittelteil 7, der mit Nockenflächen 8, 9, 10 versehen ist. Die Nockenfläche 8 dient zur Betätigung eines Einlassventils 11. Die Nockenfläche 9 dient der Betätigung eines Auslassventils 12 und die Nockenfläche 10 dient der Betätigung eines Sperrventils 13. Das Einlassventil 11 weist eine Achse 14 auf. Das Auslassventil 12 besitzt die Achse 15 und das Sperrventil 13 die Achse 16 (Fig. 2). Zumindest die Achsen 14 und 15 sind in einer gemeinsamen Ebene 17 angeordnet. Die Ebene 17 erstreckt sich senkrecht zu der Achse 4 des Schaltventils 1. Das Einlassventil 11 wird über eine Leitung 18 mit Druckluft aus einem Vorratsbehälter 19 versorgt. Das Auslassventil 15 besitzt eine Entlüftungsöffnung 20. An dem Sperrventil 13 ist eine Leitung 21 angeschlossen, die von einem Niveauregelventil 22 herangeführt ist. Aus Fig. 2 ist erkennbar, dass die Nockenflächen 8 und 9 an einem einzelnen radial im Bereich des Mittelteils 7 des Steuerkolbens 6 abstehenden Nocken 23 verwirklicht sind. Die Nockenfläche 10, die für das Sperrventil 13 vorgesehen ist, befindet sich dagegen auf der anderen Seite der Achse 4 im Bereich des Mittelteils 7.

Die Nockenflächen 8 und 9 wirken durch Verdrehung des Steuerkolbens 6 um seine Achse 4. Die Nockenfläche 10 wirkt durch Axialverschiebung des Steuerkolbens 6 ohne gleichzeitige Verdrehung.

Aus den Fig. 1 und 2 ist erkennbar, dass die drei Ventile, nämlich das Einlassventil 11, das Auslassventil 12 und das Sperrventil 13, übereinstimmend ausgebildet bzw. aufgebaut sein können. Jedes Ventil weist einen Ventilkörper 24 auf, der mit einem eingezogenen Rand 25 am Gehäuse 2 zusammenarbeitet. Außerdem ist im Bereich jedes der drei Ventile ein Stößel 26 vorgesehen, der mit dem jeweiligen Ventilkörper 24 fest verbunden sein kann. Es ist aber auch möglich, dass der Stößel 26 jeweils nur an dem betreffenden Ventilkörper 24 anliegt. Jedes der drei Ventile wird schließlich durch eine Schließfeder 27 vervollständigt. Jedes der drei Ventile ist ähnlich wie ein Rückschlagventil ausgebildet und besitzt zusätzlich zu seiner Betätigung über die jeweilige Nockenfläche 8, 9 bzw. 10 einen Stößel 26.

Der Steuerkolben 6 besitzt in seinem oberen Teil (Fig. 1) eine Verdrehwelle 28, die auch als separates Teil mit den übrigen Teilen des Steuerkolbens 6 drehfest und axialverschieblich zu einer Baueinheit zusammengefasst sein kann. Die Drehwelle weist zumindest einen radial abstehenden Flügel 29 auf. In Fig. 1 sind zwei Flügel 29 um 180° gegeneinander versetzt angeordnet und dargestellt. Im Gehäuse 2 sind in Zuordnung zu den Flügeln 29 Längsschlitze 30 vorgesehen, in die die Flügel 29 bei Überführung des Steuerkolbens 6 aus der Stellung Stop in die Stellung Fahrt (Fig. 1) eintreten. Damit wird eine Verriegelungseinrichtung gebildet, in der der Steuerkolben in der Stellung Fahrt an einer Drehung gehindert ist.

Der Steuerkolben 6 kann nur aus der Stellung Stop in die Stellung Fahrt überführt werden. Zu diesem Zweck ist der untere Teil der Bohrung 5 als Steuerkammer 31 ausgebildet, an die eine Leitung 32 angeschlossen ist, über die die Steuerkammer 31 gezielt belüftet werden kann. Ein solcher Druckimpuls kann inbesondere von einer ABS-Anlage ausgelöst oder gewonnen werden, wenn sich das Fahrzeug in Bewegung setzt und beispielsweise eine einstellbare Geschwindigkeitsschwelle überschritten wird. Damit ist dann sichergestellt, dass auch dann, wenn die Bedienungsperson die Rückstellung des Schaltventiles nach beendetem Ladebetrieb in die Fahrtstellung vergisst, verlässlich die Fahrtstellung während der Fahrt eingenommen wird, in der der Fahrzeugaufbau über das Niveauregelventil 22 gesteuert wird.

Um das Schaltventil 1 auch manuell betätigen zu können, ist ein Bedienungselement 33, meist in Form eines Drehhebels oder eines Drehknopfes vorgesehen, das drehfest mit der Verdrehwelle 28 und damit mit dem Steuerkolben 6 verbunden ist. Steuerkolben 6, Verdrehwelle 28 und Bedienungselement 33 bilden eine feste Einheit, die axialverschieblich wie auch verdrehbar angeordnet ist.

Es ist damit erkennbar, dass der Steuerkolben 6 des Schaltventils 1 nur aus der Stellung Stop heraus in die Stellung Fahrt überführt werden kann bzw. umgekehrt. Dies geschieht durch reine Axialverschiebung des Steuerkolbens 6, und zwar entweder manuell über das Bedienungselement 33 oder pneumatisch über eine Belüftung der Steuerkammer 31. Die pneumatische Betätigung löst nur eine Verstellung in einer Richtung, also aus der Stellung Stop in die Stellung Fahrt zu, es sei denn, es sind andere Mittel für eine Rückführung vorgesehen. Andererseits lässt sich der Steuerkolben 6 auch nur aus der Stellung Stop heraus in einer reinen Verdrehbewegung nach der einen Richtung in die Stellung Heben und in der anderen Richtung in die Stellung Senken betätigen. Dies geschieht durch manuelle Betätigung des Bedienungselementes 33. Nach dem Loslassen des Bedienungselementes 33 nach einem Hebe- oder Senkvorgang führen die Schließfedern 27 des Einlassventils 11 oder des Auslassventils 12 den Steuerkolben 6 wiederum in die Stellung Stop zurück. Dies ist möglich, weil die Kraft der Schließfedern 27 des Einlassventils 11 oder des Auslassventils 12 ausreicht, um ein entsprechendes Drehmoment auf den Steuerkolben 6 auszuüben. Die miteinander fluchtenden Achsen 14 und 15 des Einlassventils 11 und des Auslassventils 12 sind in einem Abstand 34 zueinander angeordnet, der gleichsam den Hebelarm für die Momentenbildung über die Kraft einer der Schließfedern 27 bildet.

Im Gehäuse 2 des Schaltventils 1 ist ein Ringraum 35 vorgesehen, der einerseits Anschluss zu dem Einlassventil 11, dem Auslassventil 12 und dem Sperrventil 13 besitzt und an den andererseits mindestens ein Luftfederbalg 36 über eine Leitung 37 angeschlossen ist.

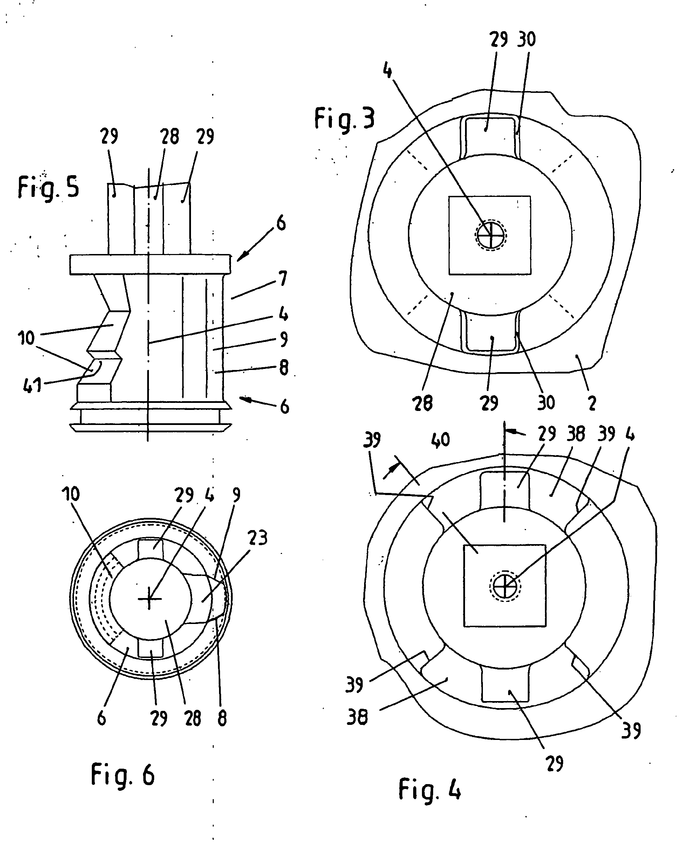

Fig. 3 verdeutlicht in vergrößernder Darstellung die Ausbildung der Verriegelungseinrichtung zur Verhinderung einer Verdrehbarkeit in der Stellung Fahrt. Es ist die Verdrehwelle 28 mit ihren beiden Flügeln 29 erkennbar, die in die Längsschlitze 30 im Gehäuse 2 eingefahren sind. Dieser Einfahrzustand ergibt sich in der Stellung Fahrt, also in der in Fig. 1 dargestellten Stellung.

Wird dagegen die Stellung Stop eingenommen, dann sind gemäß Fig. 4 die Flügel 29 aus den nicht mehr dargestellten Längsschlitzen 30 ausgefahren. Sie befinden sich in einem Bereich des Gehäuses, in dem sektorartige Freiräume 38 verwirklicht sind, die durch gehäusefeste Schultern 39 begrenzt werden. Durch die Gestaltung der Breite der Flügel 29 in Verbindung mit der Anordnung der Schultern 39 wird aus der Mittellage heraus ein Verdrehwinkel 40 festgelegt, der die maximale Verdrehung nach links oder rechts darstellt bzw. erkennen lässt. Die maximal zulässige Verdrehung bzw. der Verdrehwinkel 40 zum Erreichen der Stellung Heben ist hier gleich groß wie der entsprechende Verdrehwinkel nach der anderen Seite, also in die Stellung Senken, gestaltet. Der Verdrehwinkel 40 ist auf die Dimensionierung des Nockens 23 bzw. der Nockenflächen 8 und 9 abgestimmt, so dass auch bei maximaler Verdrehung nach der einen oder anderen Seite der Nocken 23 seine Wirkung nicht verfehlt.

Die Fig. 5 und 6 lassen die Ausbildung und Anordnung der Nockenflächen 8, 9 und 10 im Mittelteil 7 des Steuerkolbens 6 erkennen. Aus Fig. 5 ist entnehmbar, dass der Stößel 26 des Sperrventils 13 in einer Vertiefung 41 der Nockenfläche 10 verrastbar ist, wenn die Stellung Fahrt eingenommen ist. Diese Verrastung in Form einer Vertiefung, in die der Stößel 26 eintritt, sichert die Stellung Fahrt, so dass sich die axiale Lage des Steuerkolbens 6 auch dann nicht verändern kann, wenn in der Steuerkammer 31 keine Druckluft ansteht und Stöße und Schwingungen infolge der Fahrbewegung auf das Schaltventil einwirken. Andererseits wird durch die Vertiefung 41 eine Kraftschwelle definiert, die auch durch die Bemessung der Kraft der Schließfeder 27 des Sperrventils 13 mitbestimmt wird. Diese Kraftschwelle muss so ausgebildet sein, dass sie im Stillstand des Fahrzeuges bei Beginn eines Ladebetriebes manuell überwunden werden kann. Zu diesem Zweck ist das Bedienungselement 33 und damit der Steuerkolben 6 aus der Stellung Fahrt in die Stellung Stop herabzudrücken bzw. zu überführen.

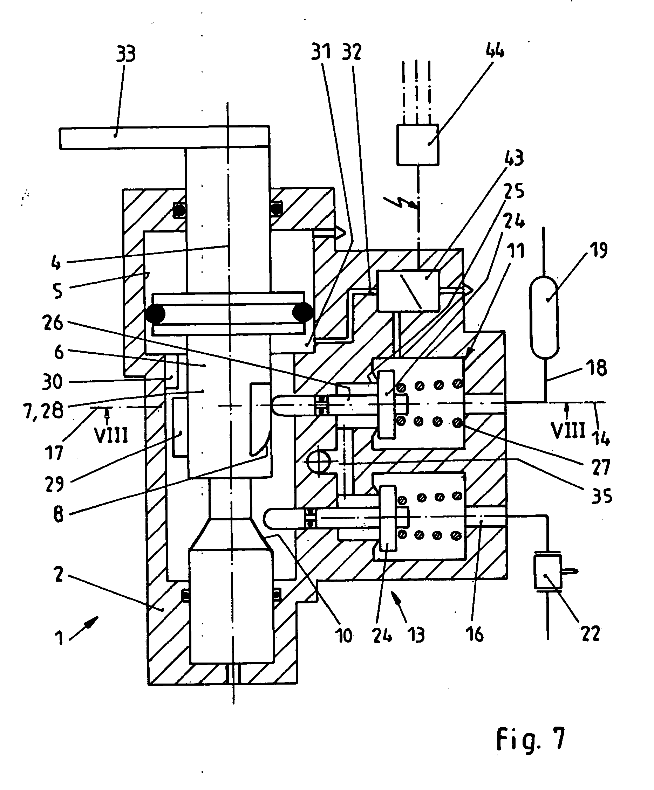

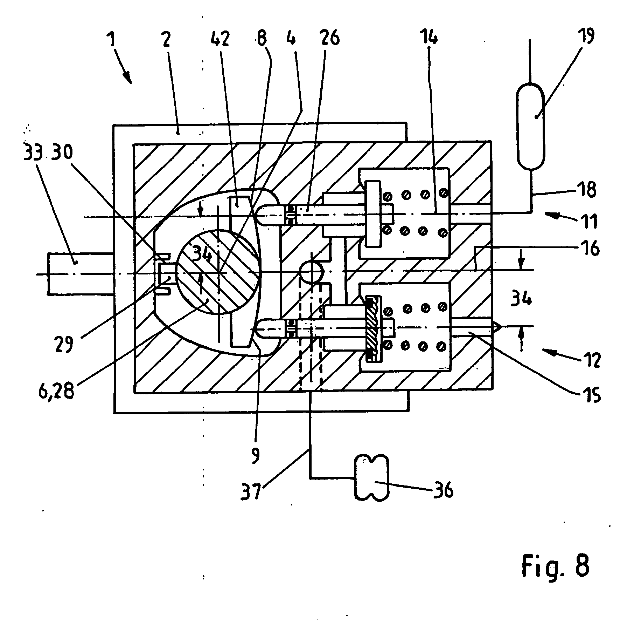

In den Fig. 7 und 8 ist eine zweite Ausführungsform des Schaltventils 1 dargestellt. Es sind prinzipiell gleiche oder ähnliche Elemente vorgesehen, so dass diesbezüglich auf die vorangehende Beschreibung verwiesen werden kann. Auch hier ist die Achse 14 des Einlassventils 11 und die Achse 15 des Auslassventils 12 in der gemeinsamen Ebene 17 angeordnet, die zugleich die Zeichenebene der Fig. 8 bildet. Die Ebene 17 erstreckt sich senkrecht zu der Achse 4 des Schaltventils 1 bzw. des Steuerkolbens 6. Das Einlassventil 11 und das Auslassventil 12 sind mit ihren Achsen 14 und 15 jedoch parallel zueinander im Abstand 34 zu der Achse 4 vorgesehen. Das Sperrventil 13 kann axial versetzt zu der Ebene 17 angeordnet sein.

Statt eines einzelnen radial abstehenden Nockens ist der Steuerkolben mit einem Balken 42 versehen, der gleichsam zwei radial abstehende Nocken bildet. Am einen Ende ist die Nockenfläche 8 angeordnet, die dem Einlassventil 11 zugeordnet ist. Das andere Ende des Balkens 42 besitzt die Nockenfläche 9, die für die Betätigung des Auslassventils 12 ausgebildet und bestimmt ist.

Auch hier ist die gegenläufige Anordnung und Bewegung der Elemente des Einlassventils 11 und des Auslassventils 12 verwirklicht. Die Begrenzung der Verdrehbarkeit des Balkens 42 ergibt sich hier durch die Gehäuseausbildung und bedarf keiner besonderen Vorkommnisse.

Fig. 7 lässt erkennen, dass im Gehäuse 2 ein Magnetventil 43 angeordnet sein kann, welches einerseits mit Druckluft versorgt wird und andererseits eine Belüftung bzw. Entlüftung der Steuerkammer 31 gestattet. Das Magnetventil 43 kann zweckmäßig über eine Elektronik 44 angesteuert werden. Alternativ kann auch hier die Steuerkammer 31 an anderer Stelle verwirklicht werden, nämlich unterhalb des Steuerkolbens 6, wie dies ebenfalls angedeutet ist.

Aus Fig. 7 ist erkennbar, dass die Nockenflächen 8, 9, 10 in besonderer Weise gestaltet und den jeweiligen Ventilen bzw. deren Stößeln 26 zugeordnet sind. Die Ausbildung ist so getroffen, dass in der Stellung Stop (Fig. 7) der Stößel 26 des Sperrventils 13 von seiner ihm zugeordneten Nockenfläche 10 freigekommen ist, so dass die Verdrehbewegung in die Stellung Heben oder Senken nicht durch eine Reibung an dem Stößel 26 des Sperrventils 13 beeinträchtigt wird. Andererseits ist sichergestellt, dass die Schließfeder 27 des Sperrventils 13 das Sperrventil 13 sicher geschlossen hält, so dass Steuerbewegungen des Niveauregelventils 22 ohne Einfluss sind. Umgekehrt ist erkennbar, dass in der Stellung Fahrt die Stößel 26 des Einlassventils 11 und des Auslassventils 12 ebenfalls von ihren zugeordneten Nockenflächen 8 und 9 freigekommen sind, so dass sich die Schließfedern 27 des Einlassventils 11 und des Auslassventils 12 in der Stellung Stop nicht auf ihren zugehörigen Nockenflächen 8 und 9 abstützen, so dass die Schließfunktion dieser beiden Ventile in der Stellung Stop sichergestellt ist. Das Spiel zwischen den Nockenflächen 8 und 9 und den zugehörigen Stößeln 26 kann freilich konstruktiv recht klein gewählt werden, um andererseits bei einer manuellen Verdrehung des Bedienungselementes 33 sofort eine be- bzw. entlüftende Wirkung zu haben.

### BEZUGSZEICHENLISTE

- 1 -: Schaltventil
- 2 -: Gehäuse
- 3 -: Deckel
- 4 -: Achse
- 5 -: Bohrung
- 6 -: Steuerkolben
- 7 -: Mittelteil
- 8 -: Nockenfläche
- 9 -: Nockenfläche
- 10 -: Nockenfläche

- 11 -: Einlassventil
- 12 -: Auslassventil
- 13 -: Sperrventil
- 14 -: Achse des Einlassventils
- 15 -: Achse des Sperrventils
- 16 -: Achse des Auslassventils
- 17 -: Ebene
- 18 -: Leitung
- 19 -: Vorratsbehälter
- 20 -: Entlüftungsöffnung

- 21 -: Leitung
- 22 -: Niveauregelventil
- 23 -: Nocken
- 24 -: Ventilkörper
- 25 -: Stößel
- 26 -: Rand
- 27 -: Schließfeder
- 28 -: Verdrehwelle
- 29 -: Flügel
- 30 -: Längsschlitz

- 31 -: Steuerkammer
- 32 -: Leitung
- 33 -: Bedienungselement
- 34 -: Abstand
- 35 -: Ringraum
- 36 -: Luftfederbalg
- 37 -: Leitung
- 38 -: Freiraum
- 39 -: Schulter
- 40 -: Verdrehwinkel

- 41 -: Vertiefung
- 42 -: Balken
- 43 -: Magnetventil
- 44 -: Elektronik

## Patentansprüche

1. Pneumatisches Schaltventil (1) für Anlagen zum Heben und Senken des Fahrzeugaufbaus von luftgefederten Fahrzeugen, mit einer ein mechanisches Bedienungselement (33) aufweisenden Steuereinrichtung für die Stellungen Heben, Senken, Fahrt und Stop, bei dem in einem Gehäuse (2) für mindestens einen Luftfederkreis je ein Einlassventil (11), ein Auslassventil (12) und ein Sperrventil (13), jeweils in Stößelbauart, vorgesehen sind, wobei das Sperrventil (13) an eine von einem Niveauregelventil (22) herangeführte Leitung (21) angeschlossen ist, und eine Federanordnung zum Rückführen des Bedienungselementes (33) nach dem Loslassen in die Stellung Stop vorgesehen ist sowie durch Beaufschlagung eines Steuerkolbens (6) mit Druckluft das Schaltventil (1) aus der Stellung Stop in die Stellung Fahrt überführbar ist, während der Steuerkolben (6) durch Verdrehen das Schaltventil (1) aus der Stellung Stop in die Stellung Heben oder Senken umschaltet, **dadurch gekennzeichnet, dass** der Steuerkolben (6) Nockenflächen (8; 9; 10) zur Betätigung der Ventilkörper (24) des Einlassventils (11), des Auslassventils (12) und des Sperrventils (13) aufweist, dass das Einlassventil und das Auslassventil gegensinnig in einer gemeinsamen Ebene (17) senkrecht zu der Achse (4) des Steuerkolbens (6) angeordnet sind, wobei die Achsen (14, 15) des Einlassventils (11) und des Auslassventils (12) einen Abstand (34) zu der Achse (4) des Steuerkolbens (6) aufweisen, und dass die Federanordnung zum Rückführen des Bedienungselementes (33) aus den Stellungen Heben oder Senken in die Stellung Stop zugleich von den Schließfedern (27) des Einlassventils (11) und des Auslassventils (12) gebildet wird.

2. Pneumatisches Schaltventil nach Anspruch 1, **dadurch gekennzeichnet, dass** der Steuerkolben (6) einen radial abstehenden Nocken (23) aufweist, der die Nockenflächen (8; 9) zum gegensinnigen Betätigen des Einlassventils (11) und des Auslassventils (12) aufweist, und dass das Einlassventil (11) und das Aüslassventil (12) mit ihren Achsen (14; 15) fluchtend zueinander angeordnet sind.

3. Pneumatisches Schaltventil nach Anspruch 1, **dadurch gekennzeichnet, dass** der Steuerkolben (6) zwei radial abstehende Nocken aufweist, die die Nockenflächen (8; 9) zur gegensinnigen Betätigung des Einlassventils (11) und des Auslassventils (12) aufweisen, und dass das Einlassventil und das Auslassventil mit ihren Achsen (14; 15) parallel zueinander angeordnet sind.

4. Pneumatisches Schaltventil nach Anspruch 1, **dadurch gekennzeichnet, dass** das Bedienungselement (33) und der Steuerkolben (6) fest verbunden sind.

5. Pneumatisches Schaltventil nach einem oder mehreren der Ansprüche 1 bis 4, **dadurch gekennzeichnet, dass** die Verdrehbarkeit des Steuerkolbens (6) durch Anschläge (39) begrenzt ist und dass sich die Nockenfläche (10) für die Betätigung des Sperrventils (13) über den durch die Anschläge (39) begrenzten Verdrehwinkel erstreckt.

6. Pneumatisches Schaltventil nach einem oder mehreren der Ansprüche 1 bis 5, **dadurch gekennzeichnet, dass** die für das Einlassventil (11) und das Auslassventil (12) bestimmten Nockenflächen (8; 9) des Steuerkolbens (6) so ausgebildet sind, dass in der Stellung Fahrt keine Anlage an den Stößeln (26) des Einlassventils (11) und Auslassventils (12) vorliegt.

7. Pneumatisches Schaltventil nach einem oder mehreren der Ansprüche 1 bis 6, **dadurch gekennzeichnet, dass** die für das Sperrventil (13) bestimmte Nockenfläche (10) des Steuerkolbens (6) so ausgebildet ist, dass in den Stellungen Stop, Heben und Senken keine Anlage an dem Stößel (26) des Sperrventils (13) vorliegt.

8. Pneumatisches Schaltventil nach Anspruch 7, **dadurch gekennzeichnet, dass** die für das Sperrventil (13) bestimmte Nockenfläche (10) des Steuerkolbens (6) so ausgebildet ist, dass in der Stellung Fahrt eine Verrastung des Steuerkolbens (6) an dem Stößel (26) des Sperrventils (13) eintritt.

9. Pneumatisches Schaltventil nach einem oder mehreren der Ansprüche 1 bis 8, **dadurch gekennzeichnet, dass** das Einlassventil (11), das Auslassventil (12) und/oder das Sperrventil (13) so ausgebildet sind, dass der jeweilige Stößel (26) mit dem jeweiligen Ventilkörper (24) fest verbunden ist.

10. Pneumatisches Schaltventil nach einem oder mehreren der Ansprüche 1 bis 9, **dadurch gekennzeichnet, dass** das Einlassventil (11), das Auslassventil (12) und das Sperrventil (13) übereinstimmend ausgebildet sind.

## Claims

1. A pneumatic switching valve (1) for systems for lifting and lowering the body of a vehicle including air suspension, comprising a control unit with a mechanical actuation element (33) being designed and arranged to adjust a lifting position, a lowering position, a driving position and a stop position, an inlet valve (11), an outlet valve (12) and a locking valve (13), all the valves for at least one air suspension circuit, being located in a housing (2) and being designed and arranged to include tappets and valve bodies, the locking valve (13) being connected to a levelling valve (22) with a conduit (21), and a spring arrangement for restoring the actuation element (33) from the lifting position and from the lowering position to the stop position when releasing the actuation element, the switching valve (1) being restorable from the stop position to the drive position by a control piston (6), the control piston being designed and arranged to be subjected to compressed air to move the switching valve (1) from the stop position to the driving position, the control piston (6) being designed and arranged to be rotated from the stop position to the lifting position or to the lowering position, **characterized in that** the control piston (6) includes a plurality of cam surfaces (8; 9; 10) being designed and arranged to actuate the valve bodies (24) of the inlet valve (11), of the outlet valve (12) and of the locking valve (13), **in that** the inlet valve and the outlet valve being arranged in one common plane (17) perpendicular to the axis (4) of the control piston (6), the axes (14, 15) of the inlet valve (11) and of the outlet valve (12) spaced apart with a distance (34) from the axis (4) of the control piston (6), and **in that** the spring arrangement for restoring the actuation element (33) from the lifting position and from the lowering position to the stop position is designed and arranged to cooperate with the closing springs (27) of the inlet valve (11) and of the outlet valve (12).

2. The switching valve of claim 1, **characterized in that** the control piston (6) includes a cam element (23) being designed and arranged to protrude in a radial direction, the cam element including cam surfaces (8; 9) being designed and arranged to actuate the inlet valve (11) and the outlet valve (12) in an opposite direction, and **in that** the axes (14; 15) of the inlet valve (11) and of the outlet valve (12) being arranged to be aligned.

3. The switching valve of claim 1, **characterized in that** the control piston (6) includes two cam elements being designed and arranged to protrude in a radial direction, the cam elements including the cam surfaces (8; 9) being designed and arranged to actuate the inlet valve (11) and the outlet valve (12), the axes (14; 15) of the inlet valve and of the outlet valve being arranged to be parallel.

4. The switching valve of claim 1, **characterized in that** the actuation element (33) is fixedly connected to the control piston (6).

5. The switching valve of one or more of the claims 1 to 4, **characterized in that** stop elements (39) are provided being designed and arranged to limit the turnability of the control piston (6), and **in that** the cam surface (10) for actuating the locking valve (13) extends over the turning angle being limited by the stop elements (39).

6. The switching valve of one or more of the claims 1 to 5, **characterized in that** the cam surfaces (8; 9) of the control piston (6) being associated with the inlet valve (11) and with the outlet valve (12) are designed and arranged not to contact the tappets (26) of the inlet valve (11) and the outlet valve (12) in the driving position.

7. The switching valve of one or more of the claims 1 to 6, **characterized in that** the cam surface (10) of the control piston (6) associated with the locking valve (13) is designed and arranged not to contact the tappet (28) of the locking valve (13) in the stop position, in the lifting position and in the lowering position.

8. The switching valve of claim 7, **characterized in that** the cam surface (10) of the control piston (6) associated with the locking valve (13) is designed and arranged such that the control piston (6) catches the tappet (26) of the locking valve (13) in the driving position.

9. The switching valve of one or more of the claims 1 to 8, **characterized in that** the inlet valve (11), the outlet valve (12) and/or the locking valve (13) are designed and arranged such that the tappet (26) and the valve body (24) of the valves are fixedly interconnected.

10. The switching valve of one or more of the claims 1 to 9, **characterized in that** the Inlet valve (11), the outlet valve (12) and the locking valve (13) have identical designs.

## Revendications

1. Soupape de commande pneumatique (1) pour des installations destinées au levage et à l'abaissement de la caisse d'un véhicule à suspension pneumatique, comportant un dispositif de commande pour les positions de levage, d'abaissement, de déplacement et d'arrêt, qui est muni d'un élément de commande (33) mécanique, dans laquelle sont prévus dans un boîtier (2) pour au moins un circuit de suspension pneumatique respectivement une soupape d'admission (11), une soupape de décharge (12) et une soupape d'arrêt (13), chacune sous la forme d'un poussoir, la soupape d'arrêt (13) étant raccordée à une conduite (21) venant d'une soupape de réglage de niveau (22), et il est prévu un système de ressort pour ramener l'élément de commande (33) après son relâchement dans la position d'arrêt, et sous l'effet de la sollicitation par air comprimé d'un piston de commande (6), la soupape de commande (1) peut être déplacée de la position d'arrêt dans la position de déplacement, tandis que, sous l'effet de la rotation de la soupape de commande (1), le piston de commande (6) peut être amené de la position d'arrêt dans la position de levage ou d'abaissement, **caractérisée en ce que** le piston de commande (6) comporte des surfaces de butée (8 ; 9 ; 10) pour actionner les corps de soupape (24) de la soupape d'admission (11), de la soupape de décharge (12) et de la soupape d'arrêt (13), **en ce que** la soupape d'admission (11) et la soupape de décharge (12) sont disposées en sens opposé dans un même plan (17) perpendiculairement à l'axe (4) du piston de commande (6), les axes (14, 15) de la soupape d'admission (11) et de la soupape de décharge (12) étant situés à distance (34) de l'axe (4) du piston de commande (6), et **en ce que** le système à ressort destiné à ramener l'élément de commande (33) hors des positions de levage et d'abaissement dans la position d'arrêt est formé en même temps par les ressorts de fermeture (27) de la soupape d'admission (11) et de la soupape de décharge (12).

2. Soupape de commande pneumatique selon la revendication 1, **caractérisée en ce que** le piston de commande (6) comporte un mentonnet (23) en saillie dans le sens radial, qui comporte les surfaces de butée (8; 9) pour l'actionnement en sens opposé de la soupape d'admission (11) et de la soupape de décharge (12), et **en ce que** la soupape d'admission (11) et la soupape de décharge (12) sont alignées l'une à l'autre par leurs axes (14 ; 15).

3. Soupape de commande pneumatique selon la revendication 1, **caractérisée en ce que** le piston de commande (6) comporte deux mentonnets en saillie dans le sens radial, qui comportent les surfaces de butée (8 ; 9) pour l'actionnement en sens opposé de la soupape d'admission (11) et de la soupape de décharge (12), et **en ce que** la soupape d'admission (11) et la soupape de décharge (12) sont disposées parallèlement l'une à l'autre par leurs axes (14 ; 15).

4. Soupape de commande pneumatique selon la revendication 1, **caractérisée en ce que** l'élément de commande (33) et le piston de commande (6) sont reliés de manière fixe.

5. Soupape de commande pneumatique selon une ou plusieurs des revendications 1 à 4, **caractérisée en ce que** la possibilité de rotation du piston de commande (6) est limitée par les butées (39) et **en ce que** la surface de butée (10) pour l'actionnement de la soupape d'arrêt (13) s'étend sur l'angle de rotation délimité par les butées (39).

6. Soupape de commande pneumatique selon une ou plusieurs des revendications 1 à 5, **caractérisée en ce que** les surfaces de butée (8 ; 9) du piston de commande (6), destinées à la soupape d'admission (11) et à la soupape de décharge (12), sont réalisées de telle sorte que, dans la position de déplacement, il n'existe aucun contact avec les poussoirs (26) de la soupape d'admission (11) et de la soupape de décharge (12).

7. Soupape de commande pneumatique selon une ou plusieurs des revendications 1 à 6, **caractérisée en ce que** la surface de butée (10) du piston de commande (6), destinée à la soupape d'arrêt (13), est réalisée de telle sorte que dans les positions d'arrêt, de levage et d'abaissement, il n'existe aucun contact avec le poussoir (26) de la soupape d'arrêt (13).

8. Soupape de commande pneumatique selon la revendication 7, **caractérisée en ce que** la surface de butée (10) du piston de commande (6), destinée à la soupape d'arrêt (13), est réalisée de telle sorte que dans la position de déplacement, le piston de commande (6) entre en prise avec le poussoir (26) de la soupape d'arrêt (13).

9. Soupape de commande pneumatique selon une ou plusieurs des revendications 1 à 8, **caractérisée en ce que** la soupape d'admission (11), la soupape de décharge (12) et/ou la soupape d'arrêt (13) sont réalisées de telle sorte que le poussoir (26) respectif est relié de manière fixe au corps de soupape (24) respectif.

10. Soupape de commande pneumatique selon une ou plusieurs des revendications 1 à 9, **caractérisée en ce que** la soupape d'admission (11), la soupape de décharge (12) et la soupape d'arrêt (13) sont réalisées de manière concordante.
